# EUROPEAN PATENT APPLICATION

(11) **EP 1 220 384 A1**
(43) Date of publication of application: **03.07.2002**
(21) Application number: 00440337.4
(22) Date of filing: 29.12.2000
(51) Int. Cl.: H01S 3/094, H01S 3/063, H01S 3/067

(54) **Optical waveguide amplifier and dual-wavelength optical pumping scheme**

(71) Applicant: ALCATEL, 75008 Paris (FR)
(72) Inventor: Roy, Fabien, Rue du Valois 91940 Les Ulis (FR); Bayart, Dominique, 92140 Clamart (FR)
(74) Representative: Rausch, Gabriele, Dr.

(57) **Abstract**

A thulium (Tm) doped waveguide amplifier (2), e.g. Tm-doped fiber amplifier (TDFA), with dual-wavelength optical pumping, wherein the two pump wavelengths are about 1200nm and about 1400nm.

A dual-wavelength Raman laser source (8) pumped at about 1100nm can be used as a single pumping module.

In one embodiment, the novel TDFA (2₂) is comprised in a double-stage TDFA (2₁,2₂) using a dual-wavelength Raman laser (8) as pumping module.

## Description

### Prior Art

The invention is related to a waveguide amplifier with an input for optical signals and an output for optical signals with at least one piece of amplifying waveguide with at least one mean (4) for coupling pump laser modules to the amplifying waveguide which contains Tm ions. The invention is also related to a pumping scheme for waveguide amplifier feeding two different wavelengths in to the waveguide .

A number of waveguide amplifiers especially fiber amplifiers for amplifying signals in an optical transmission network are well established or under investigation. There is a category using the principle of doping glass fibers with rare earth ions such as praseodymium (PR³⁺), neodymium (Nd³⁺), erbium (ER³⁺) thulium (Tm³⁺), ytterbium (Yb³⁺)
In this rare earth doped fiber amplifiers the glass is a passive host and the medium polarization responsible for the field interaction is generated by the doping ions. As the rare earth concentration can be made large, up to 10 weight % the fiber lengths can be relatively short. Signal amplification is due to stimulated emission accompanied by relaxation of the excited ion to the ground state. In this type of amplifiers the pump and the signals bands are fixed by the rare earth atomic resonances. Therefore the amplifiers have a gain spectrum with fixed center wavelength several discrete pump bands. The rare earth doped amplifiers the gain spectrum can be modified by the co dopants in the matrix. The glass host also affects the Stark level positions, transition homogeneous and inhomogeneous line widths and the non-radiative decay characteristics.

For example, US 5,973,824 is known, which describes the production and use of an amplifying fiber composed of a glass composition of germanium, arsenic, selenium and sulfur. It is also known to use other non-oxidic types of glass as material for amplifying fibers. In particular, the use of materials consisting of halides and sulfides doped with rare earths, as amplifying fibers seems promising. Compared to silica glass, halide- and in particular fluoride glass has transparent properties, which extend spectrally substantially further into the long-wave range. This is due to the spectral shift of the multi-phonon absorption edge as a result of the incorporation of substantially heavier ions. However, these types of glass present technological difficulties in respect of material production and fiber preparation. Their unfavorable mechanical properties and unfavorable behavior in humid atmospheres have so far prevented their large-scale use. Recently it has been possible to produce fibber amplifiers operating with fibers composed of ZBLAN (Zr-Ba-La-Al-Na) fluoride glass. Due to its relatively high refractive index and the flexibility of its composition, sulfide glass can be considered as a promising candidate for use as amplifying material. Therefore great efforts are being undertaken worldwide to produce many different types of halide glass with low phonon energies.

Especially thulium-doped fibers are under investigation for extending the usable bandwidth of optical communications. The intention is to create a broadband amplifier and to open the transmission window around 1480 nm, in the S-band, for data transfer.

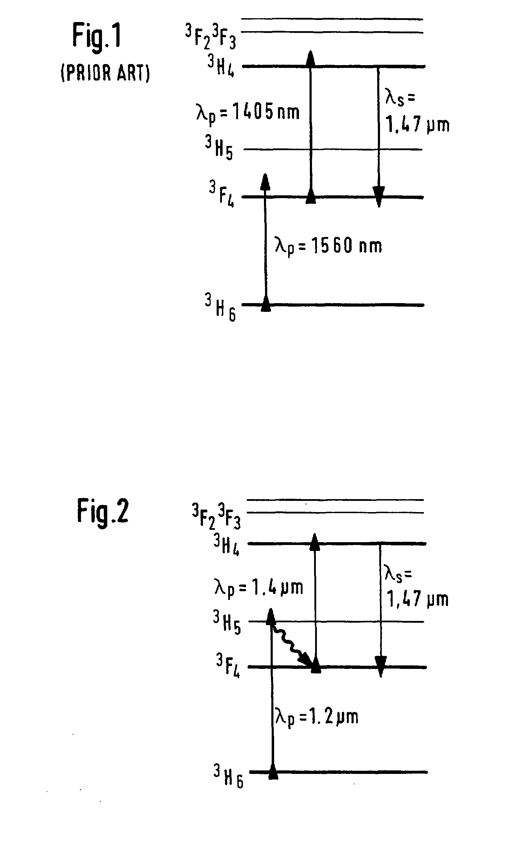

Recent publications are dealing with another kind of thulium doped fiber. The document "thulium doped silicate fiber amplifier." Samson et al. Tech. Dig. Optical Amplifier and their Application, OAA, Paper PD1, 2000 describes a fiber amplifier doped with thulium in a silicate matrix. The use of silicate glass instead of ZBLAN avoids some problems of the ZBLAN material. As an improvement the FWHM of the emission spectrum of the thulium increase in the silicate matrix to 100 nm with a broadening on the long wavelength side.
The thulium ion is pumped in a scheme shown in Fig. 1. From the ground state ₃H⁶ the first excited level ₃F⁴ is pumped. This pumping needs a 1560 pump source (ground state absorption GSA). Than the excited level ₃F⁴ is pumped with around 1400 nm pump to the level ₃H⁴ state in a process called excited state absorption ESA.
The problem with this pumping scheme is the efficiency of the GSA related to the absorption cross section of the excited level. Another problem occurs with the pumping wavelength of 1560 nm, which is in the range of the L-band signals. Therefore filtering problems for pump light occurs.

The invention proposes a waveguide amplifier with a hybrid pumping scheme for thulium-doped ions and a use of a more effective and better-adapted wavelengths.

In detail the invention allows the to build a Tm waveguide for example a fiber amplifier with two pump sources of 1200 nm and 1400 nm.

### Description of the invention

The invention is shown in the figures and described in the following description:
- Figure 1:: Prior art pumping scheme
- Figure 2:: Pumping scheme of the invention
- Figure 3:: Comparison of different pumping schemes
- Figure 4:: examples for a Tm fiber amplifier
- Figure 5:: absorption spectrum of Tm in ZBLAN matrix
- Figure 6:: Pump means related to the invention
- Figure 7:: Double stage amplifier

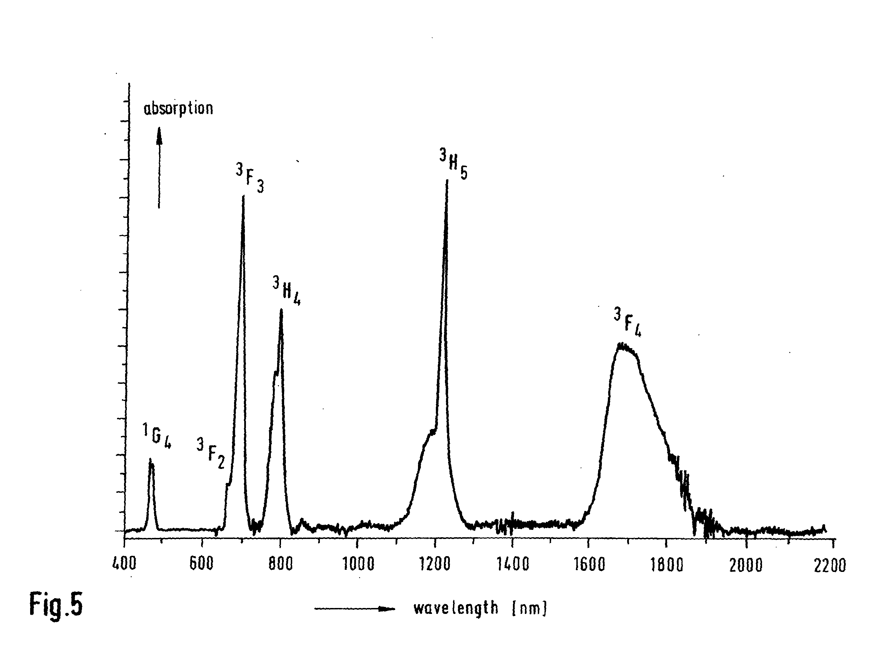

Figure 5 shows an absorption spectrum for tm ions in a ZBLAN matrix. One can see strong absorption peaks for the transfer to ₃F⁴ which is the ground state absorption. This absorption peak is broad and can be easily pumped by a semiconductor amplifier. The peak with the next higher energy level is related to the ₃H⁵ level. This absorption peak has a higher absorption cross section and a smaller absorption line. Using a laser pump with 1200 nm can very effectively pumping this level of the Tm³⁺ ion. The intermediate state converts the energy very fast in a non-radiative decay to the ₃F⁴ level. The second pump laser converts the energy of the ₃F⁴ level to the ₃F⁴ level with a wavelength of 1400 nm. For the best performance the ratio of the pump powers is important. Good result can be obtained with a ratio between the 1.2-µm pump power and the 1.4-µm pump power about 10%.

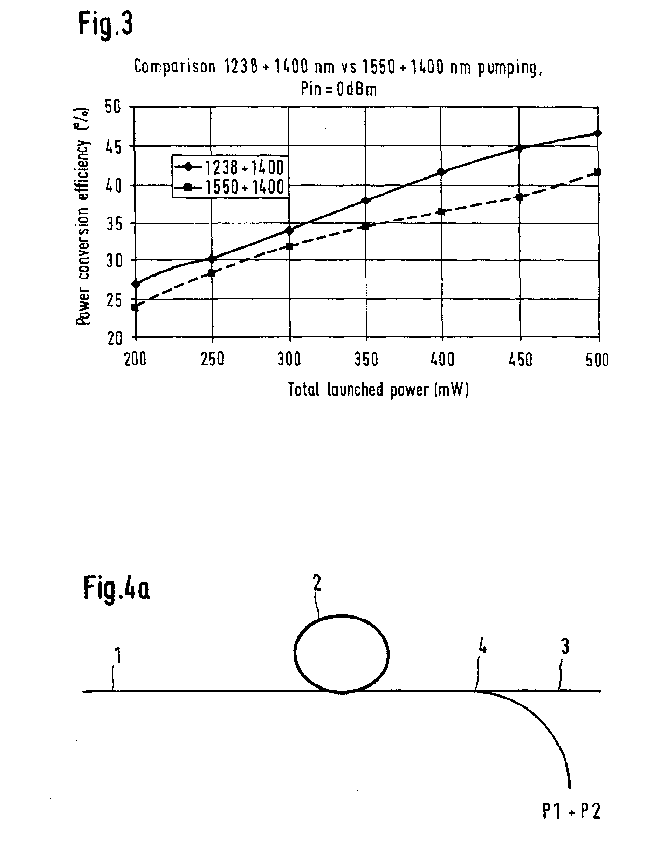

Figure 3 shows the power conversion efficiency versus the launched pump power as a comparison between the prior art pumping scheme and the pumping scheme of the invention.

Figure 4a shows an amplifier using the new pumping scheme:
The optical input signal 1 is feed to a piece of amplifying fiber 2. The amplifying fiber is coupled versus a coupling mean with laser pump modules P1 and P2. The amplified optical signal 3 leaves the amplifier. This is an example of counter propagating pumping with both necessary wavelengths. For pumping semiconductor laser modules or Roman lasers are used. For instance both 1,2 µm and 1,4 µm pumps can be provided by semiconductor lasers or by Raman laser pumping by an Yb fiber laser or a Nd crystal laser.

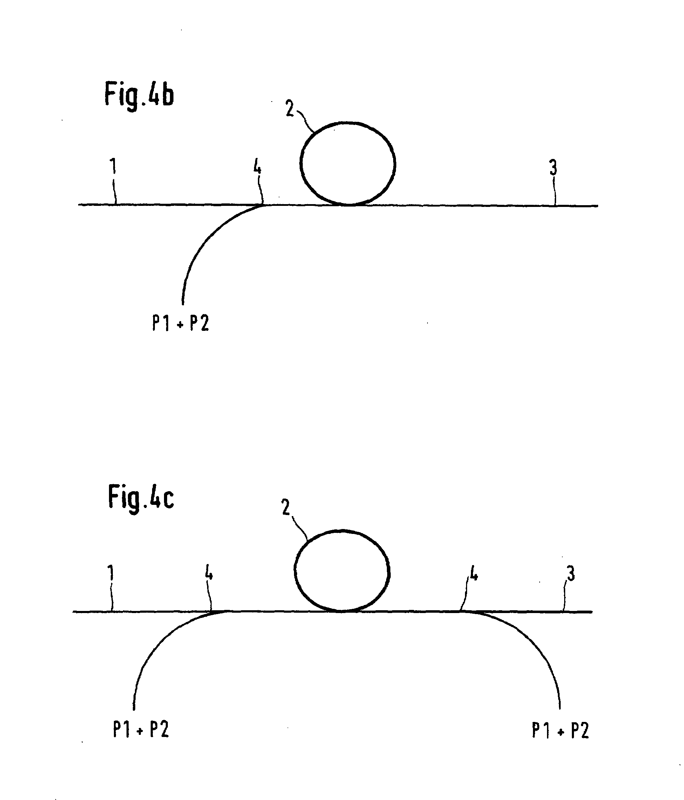

Fig. 4b shows the co propagating pumping scheme with a pumping in direction of the incoming optical signal. The coupling means 4 can be on e single coupler with a path to both lasers pump modules. Another solution uses two couplers for feeding the two necessary wavelengths to the amplifying fiber. The amplifying fiber exists in one preferred embodiment of a silicate fiber doped with at least Tm. Another preferred embodiment uses ZBLAN glass fiber with Tm dopes.

Fig. 4c shows a co/counter propagating pumping scheme where either the 1200 nm or the 1400 pump module is connected before or after the amplifying fiber.

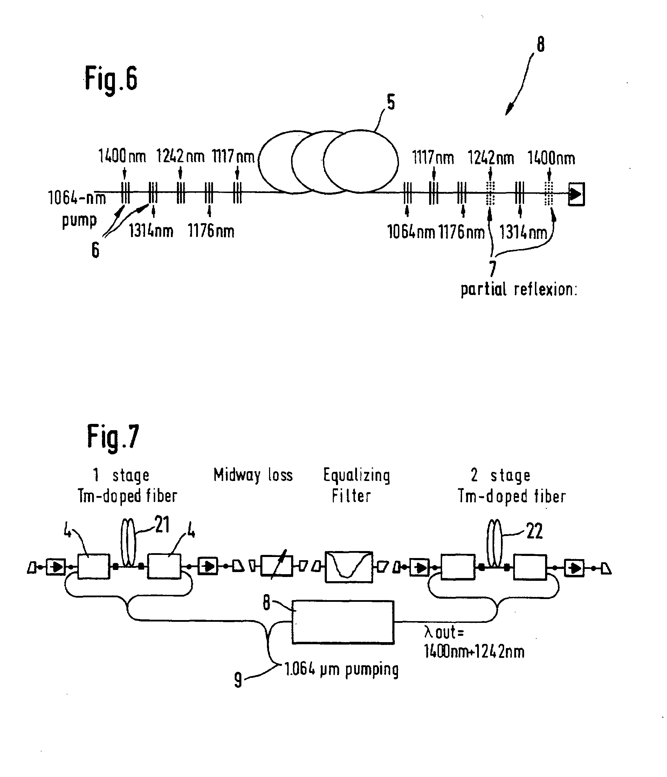

Fig. 6 shows a Raman laser that provides both 1.2-µm and 1.4-µm pump wavelength. An incoming pump signal of 1064 nm is fed into a Raman fiber 5. Reflective elements 6 create resonator environment for different Raman wavelengths. The first Stokes shift increases the wavelength of the optical signal up to 1176 nm. After three Raman shifts the signal ism1242nm and after 5 shifts the wavelength is 1400 nm. Therefore the requires pump wavelengths are available.

The pump wavelength of 1242 nm and 1400 nm are extracted via partial reflective filters 7 from the Raman laser.

Fig. 7 shows a two-stage fiber amplifier whose first stage is pumped by a combination of two wavelengths: the first wavelength is located at about 1.2 µm and the second wavelength is located at about 1.1 µm. The second stage is a fiber amplifier as described in Fig. 4. The pump mean of this two-stage amplifier is also shows in Fig. 5. A 1.1 µm source (for instance an Yb fiber laser) pump first stage of the amplifier and the Raman laser. This Raman laser provides light at two wavelengths: at 1.2 µm and at 1.4 µm. The 1.2-µm power is used to pump the two stages of the amplifier and the 1.4 µm is used to pump the second stage.

The fiber amplifiers as described in the figures and the description is an example for the realization of a waveguide amplifier doped with Tm. The waveguide structure can also be realized in a planar structure.

## Claims

1. A waveguide amplifier with an input (1) for optical signals and an output (3) for optical signals with at least one piece of amplifying fiber (2) with at least one mean (4) for coupling pump laser modules (P1, P2) to the amplifying waveguide **characterized in that** the amplifying waveguide (2) consists of a material doped with Tm ions and the pump laser modules (P1, P2) emit a first wavelength of about 1200 nm and a second wavelength of about 1400 nm.

2. Waveguide amplifier (1) according to claim 1 **characterized in that** one pump module (P1, P2) is connected to the amplifying waveguide before the amplifying fiber and one pump module (P1, P2) after the amplifying waveguide .

3. Waveguide amplifier (1) according to claim 1 **characterized in that** both pump module (P1, P2) are connected to the amplifying waveguide before the amplifying waveguide for co propagating pumping.

4. Waveguide amplifier (1) according to claim 1 **characterized in that** both pump module (P1, P2) are connected to the amplifying waveguide after the amplifying waveguide for counter propagating pumping.

5. Waveguide amplifier (1) according to claim 1 with pumping scheme for pumping Tm ions in a waveguide by feeding two pump wavelengths of about 1200 nm and 1400 nm simultaneously in the waveguide .

6. Waveguide amplifier (1) according to claim 1 whose pump is a Raman laser emitting simultaneously at two wavelengths pumped by a single pump laser.

7. Waveguide amplifier consisting of a first stage (21) with a first piece of Tm doped waveguide connected to a pump device (8, 9) connected with a second stage (22) with a second piece of TM doped waveguide connected to a pump device (8,9,) where the first stage is pumped by a combination of two wavelengths about 1.2 (m and about 1.1 (m and the second stage is pumped with wavelength about 1,4 and 1,2 (m and the pump device consists of a Raman laser (8) pumped by a pump laser (9) emitting at pump about 1.1 µm.

8. Telecom systems with at least a waveguide amplifier according to claim1 or 8.

9. Pumping scheme for pumping Tm ions in a waveguide by feeding two pump wavelength of about 1200 nm and 1400 nm simultaneously in the waveguide .
